# EUROPÄISCHE PATENTANMELDUNG

(11) **EP 0 769 538 A1**
(43) Veröffentlichungstag der Anmeldung: **23.04.1997**
(21) Anmeldenummer: 96116238.5
(22) Anmeldetag: 10.10.1996
(51) Int. Cl.: C09D 11/10, C09D 11/08, C08G 8/34

(54) **Modifizierte Naturharzsäure-Aldehyd-Addukte**

(30) Priorität: 19.10.1995 DE 19538954
(71) Anmelder: Vianova Resins GmbH, 55252 Mainz-Kastel (DE)
(72) Erfinder: Bender, Albert, Dr., 55130 Mainz (DE)

(57) **Zusammenfassung**

Modifizierte Naturharzsäureester, die aus Einheiten aus Verbindungen jeder der Gruppen
A) Naturharze und Naturharzsäuren,
B) Aldehyde und Aldehydacetale,
C) α,β-ethylenisch ungesättigten Carbonsäuren und deren Anhydride,
D) Phenole,
E) Alkohole mit mindestens zwei Hydroxylgruppen,
sowie gegebenenfalls aus Verbindungen einer oder mehrerer der Gruppen
F) Salze einwertiger, zweiwertiger und dreiwertiger Metalle,
G) Fettsäuren und Fettsäureester,
H) ethylenisch ungesättigte Kohlenwasserstoffharze
bestehen und die in Pigmentanreibungen und -konzentraten für Druckfarben geeignet sind, werden erhalten durch Umsetzung von Verbindungen der Gruppe A) mit Verbindungen der Gruppe B) und anschließende Umsetzung des Reaktionsprodukts mit Verbindungen aus jeder der Gruppen C), D) und E) sowie gegebenenfalls mit Verbindungen aus einer oder mehrerer der Gruppen F), G) und H) bei einer Temperatur von 100 bis 300 °C unter Wasserabspaltung.

## Beschreibung

Die Erfindung betrifft modifizierte Naturharzsäureester, Verfahren zu deren Herstellung durch Umsetzung von Naturharzsäure-Aldehyd-Addukten mit α,β-olefinisch ungesättigten Carbonsäuren, Phenolen und Veresterungsmittel sowie deren Verwendung als Bindemittelharze in Druckfarben.

Es ist bereits bekannt, Phenolharz-modifizierte Naturharzsäureester als Bindemittelharze in Druckfarben zu verwenden, insbesondere für den Offsetdruck und den Illustrationstiefdruck mit Toluol. Sie werden gemäß EP-A 0 666 294 hergestellt durch Umsetzung von Naturharzen oder Naturharzsäuren mit α,β-olefinisch ungesättigten Carbonsäuren oder deren Anhydriden, Phenol-Aldehyd-Kondensationsprodukten wie Resolen oder Novolaken, Veresterungsmitteln und gegebenenfalls weiteren Modifizierungsmitteln wie Fettsäuren oder Kohlenwasserstoffharzen. Zur Herstellung dieser Phenolharz-modifizierten Naturharzsäureester werden üblicherweise Salze einwertiger oder auch zweiwertiger Metalle als Katalysator benötigt. Dabei ist auch bekannt, das Phenolharz in der Naturharzschmelze aus dem Phenol und dem Aldehyd "in-situ" herzustellen.

Die Entwicklung besonders schnell laufender Druckmaschinen und der Trend, neben gestrichenen Papieren zunehmend auch nichtgestrichene Papiere mit erhöhter Saugfähigkeit zu bedrucken, stellt besonders hohe Anforderungen an die Qualität dieser Bindemittelharze. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verringerter Scheuerfestigkeit einhergeht. Mit den bekannten Bindemittelharzen können die gestiegenen Anforderungen nicht immer befriedigend erfüllt werden. Ein möglichst hoher Glanz ist aber für ein ansprechendes Druckergebnis außerordentlich wichtig.

Aufgabe der vorliegenden Erfindung war daher, Bindemittelharze bereitzustellen, die einen möglichst hohen Glanz des Farbfilms auf dem Bedruckstoff auch bei höherer Verarbeitungsgeschwindigkeit gewährleisten.

Die Aufgabe wurde gelöst, indem bei der Herstellung modifizierter Naturharzsäureester zunächst Aldehyd mit dem Naturharz oder der Naturharzsäure umgesetzt wurde, und dann die erhaltenen Naturharz- oder Naturharzsäure-Aldehyd-Addukte in einer nachgeschalteten Reaktion mit α,β-olefinisch ungesättigten Carbonsäuren, Phenolen und Veresterungsmitteln umgesetzt wurden, wobei zur weiteren Modifizierung gegebenenfalls lediglich Metallverbindungen, Fettsäuren oder Kohlenwasserstoffharze mitverwendet wurden.

Gegenstand der Erfindung sind daher modifizierte Naturharzsäureester, bestehend aus Einheiten aus Verbindungen jeder der Gruppen
A) Naturharze und Naturharzsäuren,
B) Aldehyde und Aldehydacetale,
C) α,β-ethylenisch ungesättigten Carbonsäuren und deren Anhydride,
D) Phenole,
E) Alkohole mit mindestens zwei Hydroxylgruppen,
sowie gegebenenfalls aus Verbindungen einer oder mehrerer der Gruppen
F) Salze einwertiger, zweiwertiger und dreiwertiger Metalle,
G) Fettsäuren und Fettsäureester,
H) ethylenisch ungesättigte Kohlenwasserstoffharze
und erhalten durch Umsetzung von Verbindungen der Gruppe A) mit Verbindungen der Gruppe B) und anschließende Umsetzung des Reaktionsprodukts mit Verbindungen aus jeder der Gruppen C), D) und E) sowie gegebenenfalls mit Verbindungen aus einer oder mehrerer der Gruppen F), G) und H) bei einer Temperatur von 100 bis 300 °C unter Wasserabspaltung.

Als Verbindungen der Gruppen A) bis H) finden vorzugsweise Verwendung:
A) Kolophonium, Wurzelharz, Tallharz sowie disproportioniertes oder partiell hydriertes oder dimerisiertes Naturharz beliebiger Provenienz, wobei die Naturharze oder Naturharzsäuren auch in untergeordneten Mengen weitere Terpene enthalten können,
B) aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal, wobei die Aldehyde auch in Form ihrer Acetale verwendet werden können,
C) α,β-ethylenisch ungesättigte Carbonsäuren oder deren Anhydride, insbesondere Fumarsäure, Maleinsäure, Maleinsäureanhydrid, Itakonsäure, Zimtsäure, Acrylsäure, Methacrylsäure,
D) einkernige sowie mehrkernige Phenole, die gegenüber Oxoverbindungen di-, tri- oder tetrafunktionell sind, insbesondere Phenol, (C₁-C₁₂)-Alkylphenole, Aryl- oder Aralkylphenole, Kresole, 1,3,5-Xylenole, Isopropyl-, p-tert.Butyl-, Amyl-, Octyl-, Nonylphenol, Diphenylolpropan, Phenylphenol, Cumylphenol, Naphtole, sowie Additionsprodukte aus Phenolen und ethylenisch ungesättigten Monomeren, vorzugsweise α-Methylstyrol, α-Chlorstyrol, Vinyltoluol, Cyclopentadien,
E) bifunktionelle Alkohole, beispielsweise Glykole, oder trifunktionelle Alkohole, beispielsweise Trimethylolethan, Trimethylolpropan, Glycerin, oder tetrafunktionelle Alkohole, beispielsweise Pentaerythrit, oder pentafunktionelle Alkohole, beispielsweise dimerisiertes Trimethylolpropan, oder hexafunktionelle Alkohole, beispielsweise dimerisiertes Pentaerythrit, insbesondere Glycerin und Pentaerythrit,
F) Lithium-, Natrium-, Kalium-, Magnesium-, Calcium-, Zink- oder Aluminiumsalze in Form ihrer Oxide, Hydroxide, Carbonate, Hydrogencarbonate, Acetate, Stearate, Alkoholate, insbesondere Lithiumhydroxid, Lithiumacetat und -stearat, Magnesiumoxid, Magnesiumstearat, Calciumhydroxid, Calciumoxid, Aluminiumtriisopropylat, Zinkoxid,
G) tierische, pflanzliche oder durch Raffination gewonnene Fettsäuren, ferner Fettsäureglycerinester, insbesondere in Form von vegetabilischen oder tierischen Ölen, beispielsweise Tallöl, Baumwollsaatöl, Sojaöl, Leinöl, Holzöl, Fischöl, Kokosfett, hydriertes Kokosfett, dimerisierte und trimerisierte Fettsäuren,
H) Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, oder Copolymerisate von ethylenisch ungesättigten Kohlenwasserstoffharzen mit Naturharzen oder Naturharzsäuren.

Der Massenanteil der einzelnen Verbindungen, bezogen auf die Gesamtmenge der in der Reaktionsmischung eingesetzten Verbindungen (= 100 Gew.-%), bei der Herstellung der erfindungsgemäßen modifizierten Naturharzsäureester beträgt vorzugsweise 30 bis 95 Gew.-%, insbesondere 40 bis 90 Gew.-%, Naturharz oder Naturharzsäuren aus der Gruppe A),
1 bis 20 Gew.-%, insbesondere 3 bis 10 Gew.-%, Aldehyde oder Aldehydacetale aus der Gruppe B),
0,1 bis 20, insbesondere 2 bis 10 Gew.-%, α,β-ethylenisch ungesättigte Carbonsäuren oder deren Anhydride aus der Gruppe C),
1 bis 45 Gew.-%, insbesondere 5 bis 40 Gew.-%, Phenole aus der Gruppe D),
1 bis 20 Gew.-%, insbesondere 3 bis 15 Gew.-%, Polyole aus der Gruppe E),
0 bis 10 Gew.-%, insbesondere 0,1 bis 5 Gew.-%, berechnet als Oxid, Metallsalze aus der Gruppe F),
0 bis 40 Gew.-%, insbesondere 1 bis 10 Gew.-%, Fettsäuren oder Fettsäureester aus der Gruppe G),
0 bis 30 Gew.-%, insbesondere 1 bis 25 Gew.-%, Kohlenwasserstoffharze aus der Gruppe H).

Zur Herstellung werden die in der Naturharzchemie üblichen Apparaturen verwendet. Die erfindungsgemäßen Produkte können dabei nach diskontinuier-lichen wie auch kontinuierlichen Verfahren hergestellt werden.

Zunächst wird vorzugsweise ein Naturharz- oder Naturharzsäure-Aldehyd-Addukt gemäß DE-C 27 55 825 durch Reaktion des Naturharzes oder der Naturharzsäure mit dem Aldehyd oder Aldehydacetal hergestellt. Dieses Produkt kann durch Umsetzung der Komponenten A) und B) in Lösungsmitteln, beispielsweise Toluol oder Ethanol, auch in Gegenwart von Katalysatoren, beispielsweise Chlorwasserstoff, vorzugsweise jedoch durch Reaktion in der Schmelze hergestellt werden. Die Reaktion in der Schmelze findet vorzugsweise in einem Temperaturbereich von 100 bis 200 °C statt, wobei gegebenenfalls unter Druck von vorzugsweise 1 bis 10 bar gearbeitet wird. Vorzugsweise können dabei pro Mol verwendeter Naturharzsäure bis zu zwei Mol Aldehyd angelagert werden. Es ist jedoch auch möglich, weniger als ein Mol Aldehyd pro Mol Naturharz oder Naturharzsäure anzulagern, so daß die Ansätze überschüssiges Naturharz enthalten, das während der erfindungsgemäßen Umsetzung mit den übrigen Reaktionspartnern abreagieren kann. Das Verhältnis der Stoffmengen von Aldehydkomponente B) und Naturharz(Säuren) A) beträgt daher 2:1 bis 0,5:1 mol/mol; bevorzugt 1;5:1 bis 0,7:1; besonders bevorzugt 1,2:1 bis 0,8:1 mol/mol. Bei der Umsetzung der Naturharze oder Naturharzsäuren A) mit dem Aldehyd B) liegt das Gewichtsverhältnis A) : B) zwischen 99,9 : 0,1 und 70 : 30, insbesondere zwischen 95 : 5 und 85 : 15.

Im folgenden Reaktionsschritt wird vorzugsweise das geschmolzene Naturharz- oder Naturharzsäure-Addukt, das auch nicht umgesetztes Naturharz enthalten kann, vorgelegt. Dann können zur Harzmodifizierung Fettsäuren oder ethylenisch ungesättigte Kohlenwasserstoffharze oder die Metallverbindung oder Gemische davon sowie das Phenol hinzugefügt werden. Dann wird die α,β-olefinisch ungesättigte Carbonsäuren oder dessen Anhydrid zugegeben und bei Temperaturen von vorzugsweise 120 bis 200 °C zur Reaktion gebracht. Dann fügt man das Polyol zu und erhitzt unter Wasserabspaltung auf Temperaturen von vorzugsweise 220 bis 270 °C.

Es ist jedoch auch möglich, die Reaktionspartner in veränderter Reihenfolge zum Naturharz- oder Naturharzsäure-Aldehyd-Addukt und bei unterschiedlichen Temperaturen zuzugeben, ohne daß sich die Produkteigenschaften wesentlich ändern. Beispielsweise kann die Metallverbindung auch erst bei hohen Reaktionstemperaturen von 220 bis 270 °C zugegeben werden. Dies ist bei relativ hohen Gehalten an Metallverbindung von Vorteil, um ein zu starkes, durch Wasserbildung hervorgerufenes Aufschäumen der Ansätze zu vermeiden. Es empfiehlt sich dann auch, die Metallverbindung nicht als Feststoff, sondern in suspendierter Form, beispielsweise in Xylol, dem Ansatz langsam zuzugeben.

Auch ist es möglich, zuerst das Phenol mit dem Naturharz- oder Naturharzsäure-Aldehyd-Addukt umzusetzen und dann die übrigen Reaktionspartner hinzuzufügen.

Es ist vorteilhaft, das Polyol erst nach der Reaktion der α,β-olefinisch ungesättigten Carbonsäure mit dem Naturharz- oder Naturharzsäure-Aldehyd-Addukt dem Reaktionsgemisch zuzusetzen, da ansonsten unlösliche Anteile entstehen können.

Der Fortgang der Reaktion kann zweckmäßigerweise durch die Bestimmung der Säurezahl verfolgt werden. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung fortlaufend ab. Die Veresterungsreaktion wird solange unter Destillation von Wasser, die auch unter azeotropen Bedingungen unter Verwendung eines inerten Schleppmittels, wie beispielsweise Xylol, erfolgen kann, fortgesetzt, bis die erfindungsgemäße Umsetzung das gewünschte Endstadium erreicht hat. Sobald die Säurezahl auf Werte unterhalb von 60 mg/g, vorzugsweise unter 50 mg KOH/g Harz abgesunken ist, kann zusätzlich zweckmäßigerweise durch Bestimmen der Viskositätswerte in einem Lösungsmittel, wie beispielsweise Toluol, Mineral- oder Leinöl, der Endpunkt der Reaktion ermittelt werden. Gegebenenfalls werden flüchtige Anteile, einschließlich des Schleppmittels, durch Destillation, zuletzt unter Vakuum, aus dem Reaktionsprodukt entfernt.

Die erfindungsgemäßen Bindemittelharze fallen nach Abkühlen der Schmelze zunächst als Feststoff an. Die Schmelze kann jedoch durch Zugabe von Lösungsmittel wie Toluol, Mineralöl oder auch Benzinfraktionen in einen Firnis überführt werden, wobei alle Übergänge von einer festen bis einer flüssigen Ausführung möglich sind.

Zur Bestimmung der Viskositäten werden beispielsweise die 25 Gew.-%igen toluolischen Lösungen mit einem üblichen Rotationsviskosimeter bei 23 °C vermessen. Die Viskositäten liegen zwischen 1 und 60 mPa·s, vorzugsweise in einem Bereich von 2 bis 50 mPa·s, besonders bevorzugt 5 bis 40 mPa·s, und ganz besonders 7 bis 35 mPa·s. Werden 50 Gew.-%ige toluolische Lösungen vermessen, so liegen die Viskositäten vorzugsweise in einem Bereich von 20 bis 2000 mPa·s. Wird in Leinöl gemessen, so liegen die Viskositäten der 35 Gew.-%igen Lösungen vorzugsweise in einem Bereich von 10 bis 500 dPa·s. Diese Bereiche können jedoch auch über- oder unterschritten werden.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnissen vorzugsweise bei Werten von M_{w} > 1000 g/mol und ist nach oben nicht kritisch begrenzt. Bevorzugt liegt das mittlere Molekulargewicht M_{w} jedoch in einem Bereich von 1500 bis 50.000 g/mol, besonders bevorzugt von 2000 bis 40000 g/mol, und ganz besonders bevorzugt von 3000 bis 30000 g/mol.

Da sich bekanntermaßen Naturharze verschiedener Provenienz hinsichtlich ihrer Zusammensetzung unterscheiden können, beispielsweise können sie eine unterschiedliche Isomerenverteilung der Harzsäuren oder unterschiedliche Mengen weiterer Terpene aufweisen, können bei gleicher Rezeptur auch unterschiedliche Produkteigenschaften, beispielsweise bezüglich der Viskosität, resultieren. Die Rezeptur kann dann jedoch durch geringe Änderung der Massenanteile der Komponenten in der Reaktionsmischung dem jeweiligen Naturharz angepaßt werden, um z.B. einen bestimmten Wert für die Viskosität zu erreichen.

Die erfindungsgemäßen Harze können auch während oder vorzugsweise nach der eigentlichen Umsetzung durch Zugabe weiterer Substanzen bearbeitet werden, wie es bei der Herstellung modifizierter Naturharzsäureester üblich ist. Beispielsweise ist es möglich, niedermolekulare Verbindungen wie beispielsweise Kolophonium, Kolophoniumester, vegetabile Öle, Mineralöle, oder Polymere wie Phenolharze, Polyester, Alkydharze, modifizierte Kohlenwasserstoffharze, Phenolharz-modifizierte Naturharzsäureester zuzugeben, um die Lösungsviskosität zu optimieren. Die Mengen sind jedoch untergeordnet und sollen nicht mehr als vorzugsweise 5 Gew.-%, bezogen auf das erfindungsgemäße Produkt, betragen.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol. Die erfindungsgemäßen Harze weisen eine ausgezeichnete Verträglichkeit mit anderen Bindemitteln, beispielsweise mit modifizierten Naturharzsäureestern des Standes der Technik, Resinaten, Kohlenwasserstoffharzen oder Chlorkautschuk auf, wodurch sie breit einsetzbar sind.

Sie besitzen darüber hinaus ein ausgezeichnetes Benetzungsverhalten für die im Illustrationstiefdruck verwendeten Pigmente. Außerdem zeichnen sie sich vorteilhaft durch einen vergleichsweise flachen Viskositätsverlauf beim Verdünnen mit Toluol aus, ihre Viskosität nimmt also auch bei steigendem Harzgehalt nur wenig zu. Deshalb ist auch bei vorgegebener Druckviskosität die vorteilhafte Formulierung relativ harzarmer Farben möglich, die trotzdem noch gute drucktechnische Eigenschaften besitzen. Dies macht sie insbesondere auch überlegen gegenüber Bindemittelharzen des Standes der Technik. Dieses unterschiedliche Verhalten der Bindemittelharze ist als außerordentlich überraschend zu bezeichnen.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können beispielsweise Füllstoffe wie Calciumcarbonat oder grenzflächenaktive Mittel zur Verbesserung der Pigmentdispersion wie Lecithin oder Wachse zur Verbesserung der Scheuerfestigkeit, mitverwendet werden.

Die erfindungsgemäßen Harze eignen sich auch als Bindemittelharze in Druckfarben für den Offsetdruck und den Buchdruck, wo sie insbesondere in Gelform als Gelfirnisse sehr vorteilhaft einsetzbar sind. Die Herstellung der Gelfirnisse erfolgt vorzugsweise durch Reaktion der Bindemittelharze mit Aluminiumverbindungen, wie beispielsweise Aluminiumalkoholat oder mit Acetessigester stabilisiertem Aluminiumalkoholat, nach bekannten Verfahrensweisen in hochsiedendem Mineralöl. Die Gelfirnisse werden gegebenenfalls mit weiteren Bindemittelharzen, beispielsweise Phenolharz-modifiziertenKolophoniumharzen, vegetabilischen Ölen, Wachsen, Füllstoffen, Sikkativen und weiteren Zusatzstoffen vermischt und durch Pigmentierung die für den Offset- und Buchdruck verwendbaren Druckfarben erhalten. Vorteilhafterweise sind derartige Firnisse bei den in Druckmaschinen unter Umständen auftretenden Arbeitstemperaturschwankungen in einem sehr breiten Bereich weitgehend unempfindlich in ihrem Viskositäts- und Lösungsverhalten.

Zur Ermittlung der Mineralölverträglichkeit bzw. der Klarlöslichkeit in Mineralöl der erfindungsgemäßen Harze werden diese jeweils bei 180 °C in standardisiertem Mineralöl (Siedebereich 240 bis 270 °C, Anilinpunkt 72 °C) zu 35 gew.-%igen klaren Harzlösungen gelöst, die Lösungen auf 23 °C abgekühlt und sogleich unter Rühren bis zum Auftreten einer Trübung (Trübungspunkt) mit dem gleichen Mineralöl titriert. Das am Trübungspunkt in der Lösung vorliegende Verhältnis von 1 Gewichtsteil Harz zu X Gewichtsteilen Mineralöl wird als Verträglichkeit bzw. Klarlöslichkeitsendpunkt bezeichnet.

Wegen ihrer guten Verträglichkeit mit Aliphaten sind die erfindungsgemäß modifizierten Kolophoniumharze auch in Kombination mit niedrigsiedenden Benzinfraktionen einsetzbar, so daß sie im Illustrationstiefdruck mit Benzin verwendet werden können.

Diese breite Einsetzbarkeit der neuen Verbindungen für die unterschiedlichen Druckverfahren im Offset-, Buch- und Tiefdruck bedeutet einen ganz besonders wichtigen Vorteil.

Die Erfindung wird durch die nachfolgenden Beispiele näher erläutert, ohne sie jedoch einzuschränken. Die in den Beispielen angegebenen Teile und Prozente beziehen sich auf das Gewicht, soweit nicht anders vermerkt.

### Beispiel 1: Umsetzung eines Naturharzsäure-Formaldehyd-Addukts mit Maleinsäureanhydrid, Bisphenol und Pentaerythrit

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharzsäure bezeichnet wird, und 50 g Formaldehyd eine Stunde bei 160 °C unter einem Druck von 2,5 bar erhitzt. Danach wird die Apparatur drucklos gestellt, die Schmelze mit 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 146 g Pentaerythrit zugefügt und die Mischung unter Destillation von Wasser auf 265 °C hochgeheizt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1052 g eines spröden, pulverisierbaren Harzes mit dem Erweichungspunkt 125 °C und der Säurezahl 21 mg KOH/g Harz erhalten. Eine 25 %ige Lösung in Toluol besitzt bei 23 °C eine Viskosität von 4 mPa·s und eine 50 %ige Lösung eine Viskosität von 104 mPa·s. Durch Gelpermeationschromatographie wird ein mittleres Molekülargewicht M_{w} von 5900 g/mol ermittelt. Die Reaktionszeit zur Herstellung beträgt 8 Stunden.

### Beispiel 2: Umsetzung eines Naturharzsäure-Formaldehyd-Addukts mit Maleinsäureanhydrid, Bisphenol, Pentaerythrit, Leinöl und Lithiumhydroxid

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 146 g Pentaerythrit , 2 g Lithiumhydroxid und 4 g Leinöl zugefügt und die Mischung unter Destillation von Wasser auf 265 °C hochgeheizt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1085 g eines spröden, pulverisierbaren Harzes mit dem Erweichungspunkt 130 °C und der Säurezahl 27 mg KOH/g Harz erhalten. Eine 25 %ige Lösung in Toluol besitzt bei 23 °C eine Viskosität von 3,3 mPa·s und eine 50 %ige Lösung eine Viskosität von 160 mPa·s. Durch Gelpermeationschromatographie wird ein mittleres Molekulargewicht M_{w} von 17700 g/mol ermittelt. Die Reaktionszeit zur Herstellung beträgt 8 Stunden.

### Beispiel 3: Umsetzung eines Naturharzsäure-Formaldehyd-Addukts mit Maleinsäureanhydrid, Bisphenol, Pentaerythrit und Aluminium-tri-isopropylat

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 136 g Pentaerythrit und 20 g Aluminium-tri-isopropylat zugefügt und die Mischung unter Destillation von Wasser auf 255 °C hochgeheizt. Sobald die Säurezahl unter 60 mg KOH/g Harz gesunken ist, evakuiert man zur Entfernung flüchtiger Anteile 1 h bei 100 mbar. Nach Aufheben des Vakuums mit Stickstoff werden 1053 g eines spröden, pulverisierbaren Harzes mit dem Erweichungspunkt 132 °C und der Säurezahl 55 mg KOH/g Harz erhalten. Eine 25 %ige Lösung in Toluol besitzt bei 23 °C eine Viskosität von 2 mPa·s und eine 50 %ige Lösung eine Viskosität von 56 mPa·s. Durch Gelpermeationschromatographie wird ein mittleres Molekulargewicht M_{w} von 3564 g/mol ermittelt. Die Reaktionszeit zur Herstellung beträgt 8 Stunden.

### Beispiel 4: Umsetzung eines Naturharzsäure-Formaldehyd-Addukts mit Maleinsäureanhydrid, Bisphenol, Pentaerythrit und hydriertem Kokosfett

In einem heizbaren 2 l-Autoklaven mit Rührwerk, Thermometer, Tropftrichter, Destillationsvorrichtung und Eintüllrohr werden unter einer Stickstoffatmosphäre 950 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 146 g Pentaerythrit und 30 g hydriertes Kokosfett zugefügt und die Mischung unter Destillation von Wasser auf 265 °C hochgeheizt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1060 g eines spröden, pulverisierbaren Harzes mit dem Erweichungs-punkt 125 °C und der Säurezahl 35 mg KOH/g Harz erhalten. Eine 25 %ige Lösung in Toluol besitzt bei 23 °C eine Viskosität von 1,8 mPa·s und eine 50 %ige Lösung eine Viskosität von 75 mPa·s. Die Reaktionszeit zur Herstellung beträgt 8 Stunden.

### Beispiel 5: Umsetzung eines Naturharzsäure-Formaldehyd-Addukts mit Maleinsäureanhydrid, Bisphenol, Pentaerythrit und einem Cyclopentadien-Harz

In einem heizbaren 2 l-Autoklaven mit Rührwerk, Thermometer, Tropftrichter, Destillationsvorrichtung und Einfüllrohr werden unter einer Stickstoffatmosphäre 450 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 500 g eines Dicyclopentadien-Harzes (®Escorez 8190, Fa. Exxon) und 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 90 g Pentaerythrit zugefügt und die Mischung unter Destillation von Wasser auf 255 °C hochgeheizt. Sobald die Säurezahl unter 40 mg KOH/g Harz gesunken ist, evakuiert man zur Entfernung flüchtiger Anteile 1 h bei 100 mbar. Nach Aufheben des Vakuums mit Stickstoff werden 1023 g eines spröden, pulverisierbaren Harzes mit dem Erweichungspunkt 125 °C und der Säurezahl 23 mg KOH/g Harz erhalten. Eine 25 %ige Lösung in Toluol besitzt bei 23 °C eine Viskosität von 2,8 mPa·s und eine 50 %ige Lösung eine Viskosität von 105 mPa·s. Durch Gelpermeationschromatographie wird ein mittleres Molekular-gewicht M_{w} von 5918 g/mol ermittelt. Die Reaktionszeit zur Herstellung beträgt 8 Stunden.

### Beispiel 6: Umsetzung eines Naturharzsäure-Formaldehyd-Addukts mit Maleinsäureanhydrid, Bisphenol, Pentaerythrit, Magnesiumoxid und hydriertem Kokosfett

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 146 g Pentaerythrit, 30 g hydriertes Kokosfett und 2 g Magnesiumoxid zugefügt und die Mischung unter Destillation von Wasser auf 260 °C hochgeheizt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1077 g eines spröden, pulverisierbaren Harzes mit dem Erweichungspunkt 125 °C und der Säurezahl 25 mg KOH/g Harz erhalten. Eine 25 %ige Lösung in Toluol besitzt bei 23 °C eine Viskosität von 2,6 mPa·s und eine 35 %ige Lösung in Leinöl von 170 dPa·s. Durch Gelpermeationschromatographie wird ein mittleres Molekulargewicht M_{w} von 9236 g/mol ermittelt. Die Reaktionszeit zur Herstellung beträgt 8 Stunden.

### Beispiel 7: Umsetzung eines Naturharzsäure-Formaldehyd-Addukts mit Maleinsäureanhydrid, Nonylphenol, Pentaerythrit, Magnesiumoxid, hydriertem Kokosfett und einem Cyclopentadienharz

In einem heizbaren 2 l-Autoklaven mit Rührwerk, Thermometer, Tropftrichter, Destillationsvorrichtung und Einfüllrohr werden unter einer Stickstoffatmosphäre 950 g handelsübliches Kolophonium, das auch als Naturharz oder Naturharz-säure bezeichnet wird, und 50 g Formaldehyd eine Stunde bei 160 °C unter einem Druck von 2,5 bar erhitzt. Danach wird die Apparatur drucklos gestellt, die Schmelze mit 50 g eines Cyclopentadienharzes (Escorez 8190, Fa. Exxon), 81 g Nonylphenol, 30 g hydriertes Kokosfett und 2 g Magnesiumoxid versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 146 g Pentaerythrit zugefügt und die Mischung unter Destillation von Wasser auf 265 °C hochgeheizt. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1092 g eines spröden, pulverisierbaren Harzes mit dem Erweichungspunkt 125 °C und der Säurezahl 21 mg KOH/g Harz erhalten. Eine 50 %ige Lösung in Toluol besitzt bei 23 °C eine Viskosität von 45 mPa·s und eine 35 %ige Lösung in Leinöl eine Viskosität von 25 dPa·s. Das Harz bildet mit einem Mineralöl des Siedebereichs 240 bis 270 °C und dem Anilinpunkt 72 °C im Gewichtsverhältnis 1 Teil Harz und 7 Teile Mineralöl gemischt, eine stabile Lösung. Durch Gelpermeationschromatographie wird ein mittleres Molekulargewicht M_{w} von 8712 g/mol ermittelt. Die Reaktionszeit zur Herstellung beträgt 8 Stunden.

### Beispiel 8: Umsetzung eines Naturharzsäure-Formaldehyd-Addukts mit Maleinsäureanhydrid, Bisphenol, Pentaerythrit, Calciumhydroxid und einem Cyclopentadien-Harz

In einem heizbaren 2 l-Autoklaven mit Rührwerk, Thermometer, Tropftrichter, Destillationsvorrichtung und Einfüllrohr werden unter einer Stickstoffatmosphäre 475 g handelsübliches Kolophonium, das auch als Naturharz oder Naturharz-säure bezeichnet wird, und 25 g Formaldehyd eine Stunde bei 160 °C unter einem Druck von 2,5 bar erhitzt. Danach wird die Apparatur drucklos gestellt, die Schmelze mit 500 g eines Cyclopentadienharzes (Escorez 8190, Fa. Exxon), 42 g Bisphenol A (Diphenylolpropan) versetzt und während einer weiteren halben Stunde gerührt. Anschließend wird das Reaktionsgemisch mit 50 g Maleinsäureanhydrid versetzt und weitere 30 Minuten bei 160 °C erhitzt. Danach werden 68 g Pentaerythrit zugefügt und die Mischung unter Destillation von Wasser auf 255 °C hochgeheizt. Dann werden 24 g Calciumhydroxid eingestreut. Sobald die Säurezahl unter 35 mg KOH/g Harz gesunken ist, evakuiert man zur Entfernung flüchtiger Anteile 1 h bei 100 mbar. Nach Aufheben des Vakuums mit Stickstoff werden 1065 g eines spröden, pulverisierbaren Harzes mit dem Erweichungspunkt 135 °C und der Säurezahl 21 mg KOH/g Harz erhalten. Eine 25 %ige Lösung in Toluol besitzt bei 23 °C eine Viskosität von 3 mPa·s und eine 50 %ige Lösung eine Viskosität von 121 mPa·s. Durch Gelpermeationschromatographie wird ein mittleres Molekulargewicht M_{w} von 6327 g/mol ermittelt. Die Reaktionszeit zur Herstellung beträgt 8 Stunden.

### Anwendungstechnischer Vergleich

Nach üblichen Verfahren werden jeweils aus den Bindemittelharzen des Beispiels 8 (Farbe A) und einem handelsüblichen Phenolharz-modifizierten Naturharzsäureester (Zinkgehalt, bestimmt als ZnO, 4,5 Gew.-%, Viskosität (25 %ig in Toluol) bei 23 °C: 4,5 mPa·s (Farbe B)) nach den üblichen Methoden durch Dispergieren einer Mischung von
- 24 g: Bindemittelharz
- 9 g: ®Pigment Litholrubin (Rotpigment, Fa. BASF AG)
- 67 g: Toluol

Farben für den Illustrationstiefdruck mit Toluol hergestellt und im Tiefdruckverfahren stark saugendes Papier bedruckt.

Der Glanz der Andrucke, der für ein gutes drucktechnisches Ergebnis möglichst hoch sein soll, wird sodann mit dem Laborreflektometer nach Lange bei einem Einstrahlwinkel von 60 ° gemessen. Er liegt bei der mit dem erfindungsgemäßen Harz formulierten Farbe höher als bei der mit dem Vergleichsharz formulierten Farbe.

| | | |
|---|---|---|
| Farbe | A | B |
| Glanz [%] | 64 | 58 |

## Patentansprüche

1. Modifizierte Naturharzsäureester, bestehend aus Einheiten aus Verbindungen jeder der Gruppen
A) Naturharze und Naturharzsäuren,
B) Aldehyde und Aldehydacetale,
C) α,β-ethylenisch ungesättigten Carbonsäuren und deren Anhydride,
D) Phenole,
E) Alkohole mit mindestens zwei Hydroxylgruppen,
sowie gegebenenfalls aus Verbindungen einer oder mehrerer der Gruppen
F) Salze einwertiger, zweiwertiger und dreiwertiger Metalle,
G) Fettsäuren und Fettsäureester,
H) ethylenisch ungesättigte Kohlenwasserstoffharze
und erhalten durch Umsetzung von Verbindungen der Gruppe A) mit Verbindungen der Gruppe B) und anschließende Umsetzung des Reaktionsprodukts mit Verbindungen aus jeder der Gruppen C), D) und E) sowie gegebenenfalls mit Verbindungen aus einer oder mehrerer der Gruppen F), G) und H) bei einer Temperatur von 100 bis 300 °C unter Wasserabspaltung.

2. Modifizierte Naturharzsäureester nach Anspruch 1, dadurch gekennzeichnet, daß
30 bis 95 Gew.-% Naturharze oder Naturharzsäuren aus der Gruppe A),
1 bis 10 Gew.-% Aldehyde oder Aldehydacetale aus der Gruppe B),
0,1 bis 20 Gew.-% α,β-ethylenisch ungesättigte Carbonsäuren oder deren Anhydride aus der Gruppe C),
1 bis 45 Gew.-% Phenole aus der Gruppe D),
1 bis 20 Gew.-% mehrwertige Alkohole aus der Gruppe E),
0 bis 10 Gew.-%, berechnet als Oxid, Metallsalze aus der Gruppe F),
0 bis 40 Gew.-% Fettsäuren oder Fettsäureester aus der Gruppe G),
0 bis 30 Gew.-% Kohlenwasserstoffharze aus der Gruppe H),
miteinander umgesetzt werden, wobei die Gesamtmenge der eingesetzten Komponenten 100 Gew.-% beträgt.

3. Modifizierte Naturharzsäureester nach Anspruch 1, dadurch gekennzeichnet, daß zumindest jeweils eine oder mehrere Verbindungen aus den Gruppen A), B), C), D), E) und G) miteinander umgesetzt werden.

4. Modifizierte Naturharzsäureester nach Anspruch 1, dadurch gekennzeichnet, daß zumindest jeweils eine oder mehrere Verbindungen aus den Gruppen A), B), C), D), E) und H) miteinander umgesetzt werden.

5. Modifizierte Naturharzsäureester nach Anspruch 1, dadurch gekennzeichnet, daß zumindest jeweils eine oder mehrere Verbindungen aus den Gruppen A), B), C), D), E) und F) miteinander umgesetzt werden und die Verbindungen aus der Gruppe F) einwertige oder dreiwertige Metallsalze sind.

6. Modifizierte Naturharzsäureester nach Anspruch 5, dadurch gekennzeichnet, daß die Verbindungen aus der Gruppe F) Lithiumhydroxid, Lithiumacetat, Lithiumstearat oder Aluminiumtriisopropylat sind.

7. Modifizierte Naturharzsäureester nach Anspruch 1, dadurch gekennzeichnet, daß bei der Umsetzung der Naturharze oder Naturharzsäuren A) mit den Aldehyden B) das Gewichtsverhältnis A) : B) zwischen 99,9 : 0,1 und 70 : 30 liegt.

8. Verwendung der modifizierten Naturharzsäureester nach Anspruch 1 in Pigmentanreibungen oder Pigmentkonzentraten.

9. Verwendung der modifizierten Naturharzsäureester nach Anspruch 1 in Druckfarben.

10. Verwendung der modifizierten Naturharzsäureester nach Anspruch 1 in Druckfarben für den Illustrationstiefdruck mit Toluol.
